# EUROPEAN PATENT APPLICATION

(11) **EP 1 205 380 A1**
(43) Date of publication of application: **15.05.2002**
(21) Application number: 00124821.0
(22) Date of filing: 14.11.2000
(51) Int. Cl.: B62K 3/00, A63C 17/00

(54) **Combination of skateboard and skating scooter**

(71) Applicant: Chen, Chao-Hu, Taichung Hsien (TW)
(72) Inventor: Chen, Chao-Hu, Taichung Hsien (TW)
(74) Representative: Leson, Thomas Johannes Alois, Dipl.-Ing.

(57) **Abstract**

A skating scooter includes a board having a rear wheel (300) connected to a rear end thereof and a handlebar assembly (20) connected to a front end of the board. A front wheel (200) is connected to a lower end of the handlebar assembly (20). Four clamping members (31) are connected to two sides of the board of the skating scooter and the four clamping members (31) are engaged with two sides of a skateboard (10) which is then securely positioned on a top of the board of the skating scooter.

## Description

### FIELD OF THE INVENTION

The present invention relates to a combination of a skateboard and a skating scooter wherein a skateboard is disengagably connected to a top of a deck of the skating scooter.

### BACKGROUND OF THE INVENTION

A conventional skating scooter includes a board which has a rear wheel connected to a rear end of the board and a handlebar assembly is connected to a front end of the board. A front wheel is connected to a lower end of the handlebar assembly. A user steps one foot on the board and holds the handlebar to move the skating scooter forward by kicking the other foot to the ground. The skating scooter cannot be used as the skateboard because of the handlebar stem and the total weight of the skating scooter is much heavier than the skateboard. Nevertheless, the skating scooter is a convenient tool to be a transportation means for a short distance travel. It is a need for users to play skateboard at a fixed area and get to that area by the skating scooter.

The present invention intends to provide a combination of a skateboard and a skating scooter wherein the skateboard is disengagably connected to a top of the board of the skating scooter so that the users may choose either one of the skateboard or the skating scooter from the combination.

### SUMMARY OF THE INVENTION

In accordance with one aspect of the present invention, there is provided a combination of a skateboard and skating scooter, and comprising a board having a rear wheel connected to a rear end thereof and a handlebar assembly connected to a front end of the board. A front wheel is connected to a lower end of the handlebar assembly and a skateboard is disengagably connected to a top of the board of the skating scooter.

The primary object of the present invention is to provide a combination that includes a skateboard securely connected to a top of the board of the skating scooter.

These and further objects, features and advantages of the present invention will become more obvious from the following description when taken in connection with the accompanying drawings which show, for purposes of illustration only, several embodiments in accordance with the present invention.

### BRIEF DESCRIPTION OF THE DRAWINGS

Fig. 1 is an exploded view to show a combination of a skateboard and skating scooter of the present invention;
Fig. 2 is a front view to illustrate how the clamping members engaging two sides of the skateboard;
Fig. 3 is an exploded view to show another embodiment of the combination of a skateboard and skating scooter of the present invention, and
Fig. 4 is a perspective view to show the combination of the present invention.

### DETAILED DESCRIPTION OF THE PREFERRED EMBODIMENTS

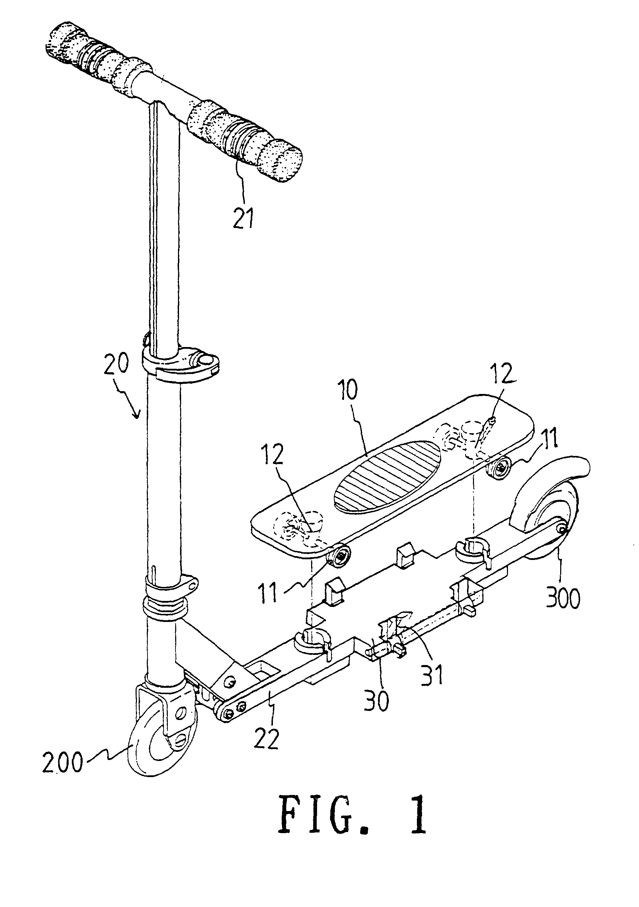

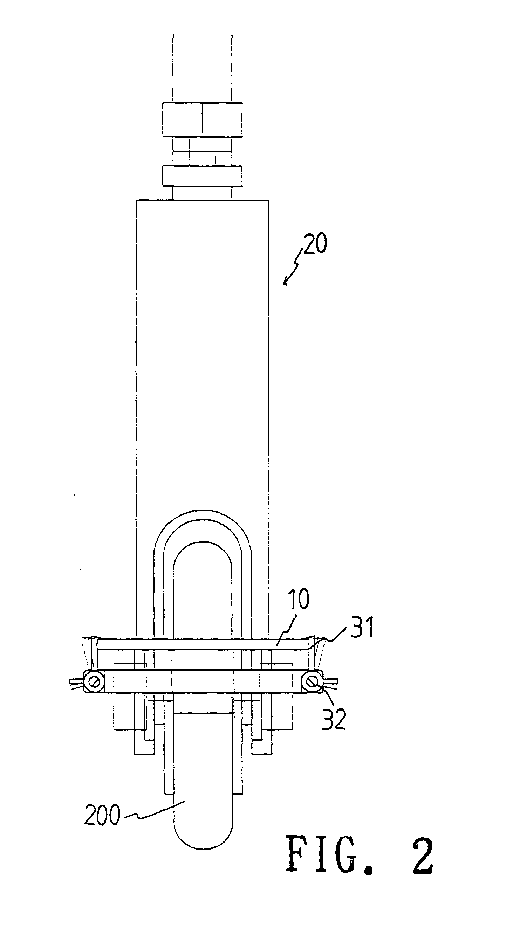

Referring to Figs. 1 and 2, the combination of the present invention comprises a board 30 having a rear wheel 300 connected to a rear end thereof and a handlebar assembly 20 pivotally connected to a front end of the board 30. A front wheel 200 is connected to a lower end of the handlebar assembly 20 and a handlebar 21 is connected to a top of the handlebar assembly 20. Four clamping members 31 are respectively connected to two sides of the board 30 and each clamping member 31 is biased by a torsion spring member 32 so that the clamping members 31 can be pulled away from the board 30 by the user. Each clamping member 31 has a hook end and the hook ends of the four clamping member 31 are able to engage a top of two sides of the skateboard 10 which has two shafts on an underside of thereof and two wheels 11 are connected to two ends of each shaft.

Therefore, the skateboard 10 can be securely positioned on a top surface of the board 30 by using the four clamping members 31 to engage the skateboard 10. When using the skateboard 10, the user simply pulls the clamping members 31 away from the skateboard 10 to separate the skateboard 10 from the board 30 of the skating scooter.

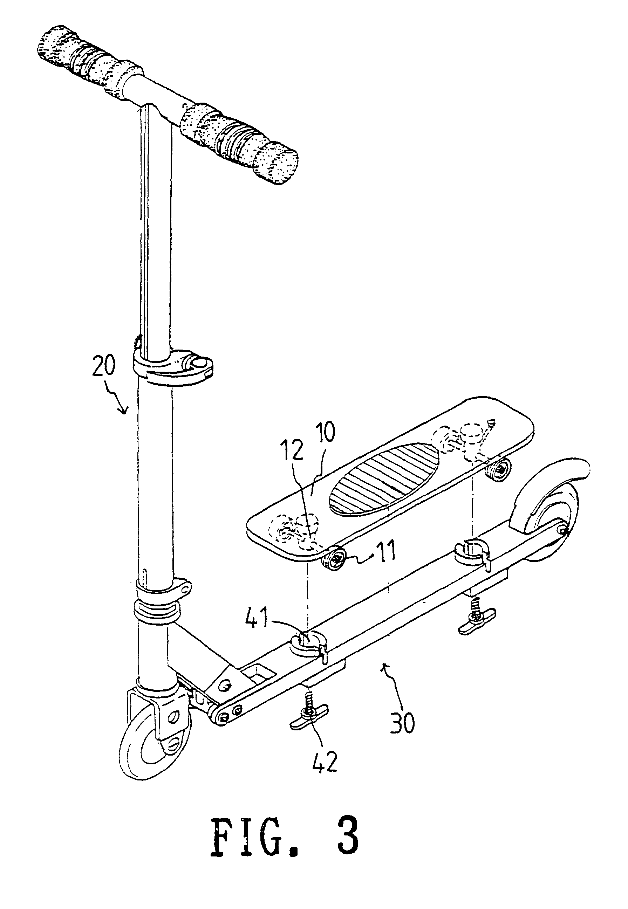

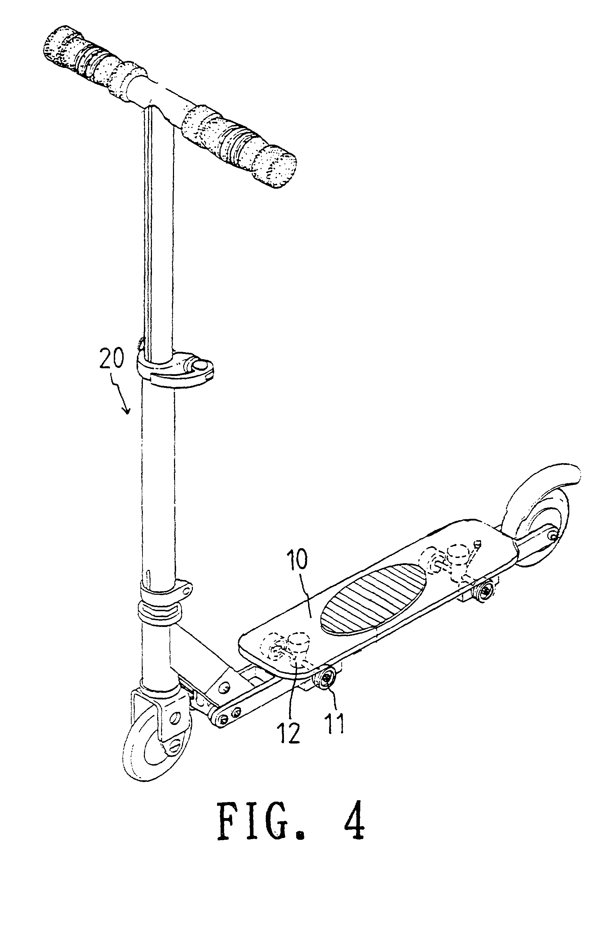

As shown in Figs. 3 and 4, the skateboard 10 may be connected to the board 30 of the skating scooter by another way which includes two apertures 41 defined through the board 30 of the skating scooter and two tubular members 12 extending from the underside of the skateboard 10. The two tubular members 12 are inserted into the two apertures 41 and two bolts 42 extend through the apertures 41 and are engaged with the two tubular members 12. Each bolt 42 has a T-shaped bar which is longer than a diameter of each of the apertures 41 so that the skateboard 10 cannot disengage from the board 30 of the skating scooter without loosening the bolts 42.

While we have shown and described various embodiments in accordance with the present invention, it should be clear to those skilled in the art that further embodiments may be made without departing from the scope and spirit of the present invention.

A skating scooter includes a board having a rear wheel connected to a rear end thereof and a handlebar assembly connected to a front end of the board. A front wheel is connected to a lower end of the handlebar assembly. Four clamping members are connected to two sides of the board of the skating scooter and the four clamping members are engaged with two sides of a skateboard which is then securely positioned on a top of the board of the skating scooter.

## Claims

1. A combination of a skateboard and skating scooter, comprising:
a board having a rear wheel connected to a rear end thereof and a handlebar assembly connected to a front end of said board, a front wheel connected to a lower end of said handlebar assembly, and
a skateboard disengagably connected to said board.

2. The combination as claimed in claim 1 further comprising four clamping members connected to two sides of said board, each clamping member having a hook end and said hook ends of said four clamping member engaging a top of two sides of said skateboard.

3. The combination as claimed in claim 1 further comprising two apertures defined through said board of said skating scooter and two tubular members extending from an underside of said skateboard, said two tubular members inserted into said two apertures and two bolts extending through said apertures and engaged with said two tubular members.

4. The combination as claimed in claim 3, wherein each bolt has a T-shaped bar which is longer than a diameter of each of said apertures.
